# EUROPÄISCHE PATENTSCHRIFT

(11) **EP 4 227 561 B1**
(45) Veröffentlichungstag und Bekanntmachung des Hinweises auf die Patenterteilung: **03.12.2025**
(21) Anmeldenummer: 23151336.7
(22) Anmeldetag: 12.01.2023
(51) Int. Cl.: F16K 3/18, F16K 3/314, F16K 51/02

(54) **VENTIL**
VALVE
SOUPAPE

(30) Priorität: 11.02.2022 DE 102022103235
(43) Veröffentlichungstag der Anmeldung: 16.08.2023
(73) Patentinhaber: VAT Holding AG, 9469 Haag (CH)
(72) Erfinder: MAYER, Thomas, 6845 Hohenems (AT)
(74) Vertreter: Torggler & Hofmann Patentanwälte - Rankweil

(56) Entgegenhaltungen:
- DE-U- 1 689 465
- US-A- 1 803 889
- US-A- 2 210 189

## Beschreibung

Die vorliegende Erfindung betrifft ein Ventil, insbesondere Vakuumventil, mit einem Ventilgehäuse und Ventilöffnungen in einander gegenüberliegenden Wandbereichen des Ventilgehäuses und mit einem Verschlussorgan sowie zumindest einem Ventilantrieb, wobei das Verschlussorgan in einer Schließstellung zumindest eine der Ventilöffnungen verschließt und in einer Zwischenstellung von beiden Ventilöffnungen abgehoben zwischen den Ventilöffnungen angeordnet ist und in einer maximalen Freigabestellung die Ventilöffnungen vollständig freigibt, wobei das Verschlussorgan von dem zumindest einen Ventilantrieb in einander entgegengesetzten ersten Bewegungsrichtungen zwischen der maximalen Freigabestellung und der Zwischenstellung hin und her bewegbar ist und in einander entgegengesetzten zweiten Bewegungsrichtungen zwischen der Zwischenstellung und der Schließstellung hin und her bewegbar ist, wobei das Ventil zusätzlich zwei einander gegenüberliegend angeordnete Flansche mit jeweils einer Durchführöffnung aufweist, wobei die Flansche von dem zumindest einen Ventilantrieb aufeinander zu und voneinander weg bewegbar sind und bezüglich der Bewegungen des Verschlussorgans entlang der ersten Bewegungsrichtungen mit dem Verschlussorgan zwangsgekoppelt mitbewegbar verbunden sind, wobei die Flansche in der maximalen Freigabestellung des Verschlussorgans an die einander gegenüberliegenden Wandbereiche des Ventilgehäuses angedrückt sind und dabei die Durchführöffnungen der Flansche die Ventilöffnungen miteinander verbinden.

Ventile dieser Art werden in der Praxis z.B. in Teilchenbeschleunigern und dergleichen eingesetzt, wobei in der maximalen Freigabestellung des Verschlussorgans geladene Teilchen, insbesondere ein Strahl von geladenen Teilchen durch die Ventilöffnung und die Durchführöffnung der Flansche hindurchgeführt werden können. Dabei ist es wichtig, dass erfindungsgemäße Ventile die geladenen Teilchen bzw. den Strahl von geladenen Teilchen möglichst wenig ablenken. Beim Stand der Technik ist aus offenkundiger Vorbenutzung ein Ventil dieser Art bekannt, bei dem zwischen den Flanschen elastisch gespannte Plättchen angeordnet sind, welche beim aufeinander zu- und voneinander weg-Bewegen der Flansche elastisch verformt werden. Bei diesen gespannten Plättchen verändert sich der Öffnungsquerschnitt über den Verlauf der Durchführöffnung, was zu einer ungewollten Ablenkung der durch die Durchführöffnungen der Flansche hindurchgeführten, geladenen Teilchen führen kann. Ein Ventil mit den Merkmalen des Oberbegriffs von Anspruch 1 ist aus US 1 803 889 A bekannt.

Aufgabe der Erfindung ist es, ein gattungsgemäßes Ventil dahingehend zu verbessern, dass die geladenen Teilchen bzw. der Strahl der geladenen Teilchen möglichst ungestört durch die Durchführöffnungen der Flansche hindurchgeführt werden können bzw. kann.

Hierfür schlägt die Erfindung ein Ventil gemäß Patentanspruch 1 vor.

Es ist somit erfindungsgemäß vorgesehen, dass die beiden Flansche jeweils eine Abfolge von Fingern und jeweils zwischen zwei benachbarten Fingern angeordneten Ausnehmungen aufweisen, wobei die Finger des jeweiligen Flansches die Durchführöffnung des jeweiligen Flansches umgeben und die Finger des einen Flansches jeweils in die Ausnehmungen des anderen Flansches eingreifen.

Durch die erfindungsgemäße Ausgestaltung der beiden Flansche mit den Fingern und den jeweils dazwischen angeordneten Ausnehmungen ist es möglich, die Öffnungsquerschnitte der Durchführöffnungen der Flansche konstant bzw. überall im Wesentlichen gleich groß zu halten. Es hat sich überraschenderweise gezeigt, dass hierdurch sehr wirksam eine ungewollte Ablenkung der geladenen Teilchen bzw. des Strahls an geladenen Teilchen beim Durchtritt durch die Durchführöffnungen und die Ventilöffnungen vermieden wird. Bevorzugt ist in diesem Zusammenhang vorgesehen, dass die Öffnungsquerschnitte der Durchführöffnungen der Flansche zumindest im Bereich der Finger überall gleich groß sind. Dies gilt wiederum bevorzugt insbesondere dann, wenn die Flansche in der maximalen Freigabestellung des Verschlussorgans an die einander gegenüberliegenden Wandbereiche des Ventilgehäuses angedrückt sind.

Die Durchführöffnungen der beiden Flansche sind günstigerweise in allen Stellungen der Flansche miteinander fluchtend angeordnet. Auch die Ventilöffnungen in den einander gegenüberliegenden Wandbereichen des Ventilgehäuses sind günstigerweise miteinander fluchtend angeordnet.

Erfindungsgemäße Ventilantriebe können einen einzigen Ventilantrieb aufweisen, welcher das Verschlussorgan und die Flansche in den einander entgegengesetzten ersten Bewegungsrichtungen bewegt, aber auch das Verschlussorgan in den einander entgegengesetzten zweiten Bewegungsrichtungen und auch die Flansche bei ihren Bewegungen aufeinander zu und voneinander weg antreibt. Alternativ können erfindungsgemäße Ventile natürlich aber auch mit zwei oder mehr Ventilantrieben ausgebildet sein, z.B. mit einem ersten Ventilantrieb zur Bewegung des Verschlussorgans und der Flansche in den einander entgegengesetzten ersten Bewegungsrichtungen und mit zumindest einem weiteren Ventilantrieb zum Bewegen des Verschlussorgans in den einander entgegengesetzten zweiten Bewegungsrichtungen und/oder zum aufeinander zu- und voneinander weg Bewegen der Flansche. Zur Ausgestaltung solcher Ventilantriebe gibt es im Stand der Technik verschiedenste Möglichkeiten, welche in entsprechend angepasster Form bei erfindungsgemäßen Ventilen eingesetzt werden können.

Die einander gegenüberliegenden Wandbereiche des Ventilgehäuses, in denen sich die Ventilöffnungen befinden, können bevorzugt und in an sich bekannter Weise jeweils als eine der Ventilöffnungen umgebende Ventilsitze ausgeführt sein.

Die zweiten Bewegungsrichtungen und vorzugsweise auch die Bewegungsrichtungen, in denen die Flansche aufeinander zu- und voneinander weg bewegbar sind, sind günstigerweise abgewinkelt, vorzugsweise orthogonal, zu den einander entgegengesetzten ersten Bewegungsrichtungen ausgerichtet.

Wenn die Flansche in der maximalen Freigabestellung des Verschlussorgans an die einander gegenüberliegenden Wandbereiche des Ventilgehäuses angedrückt sind, könnte man auch davon sprechen, dass die Durchführöffnungen der Flansche die Ventilöffnungen fluidleitend miteinander verbinden. Fluidleitend ist dahingehend zu verstehen, dass eben zumindest geladene Teilchen und/oder ein Strahl von geladenen Teilchen durch die Durchführöffnungen und die Ventilöffnung hindurchgeführt werden können bzw. kann.

Bei dem Verschlussorgan kann es sich um eine Ventilplatte aber auch um anders ausgeformte Verschlussorgane handeln. Auch hier kann grundsätzlich auf verschiedene Ausgestaltungsformen gemäß dem Stand der Technik zurückgegriffen werden. Die Finger der Flansche können stiftaber auch plattenförmig ausgebildet sein. Es handelt sich letztendlich um längserstreckte Elemente mit einem frei auskragenden Ende, zwischen denen die entsprechenden Ausnehmungen angeordnet sind. Man könnte anstelle von Fingern auch von Kammelementen oder Zinken sprechen.

Günstigerweise ist jedenfalls vorgesehen, dass die Finger des einen Flansches in allen Stellungen der Flansche relativ zueinander jeweils in die Ausnehmungen des jeweils anderen Flansches eingreifen. Weiters ist günstigerweise vorgesehen, dass die Finger des einen Flansches die Finger des anderen Flansches nicht berühren. Dies gilt günstigerweise wiederum in allen Stellungen der Flansche relativ zueinander. Alternativ könnte man auch davon sprechen, dass die Finger des einen Flansches, vorzugsweise in allen Stellungen der Flansche relativ zueinander, berührungsfrei in den Ausnehmungen zwischen den Fingern des anderen Flansches angeordnet sind. Bevorzugt ist jedenfalls, dass die Finger des jeweiligen Flansches die Durchführöffnung des jeweiligen Flansches ringförmig umgeben. Die Finger des jeweiligen Flansches sind bevorzugt in Richtung hin zum anderen Flansch gerade und/oder längserstreckt ausgebildet.

Bevorzugte Varianten der Erfindung sehen vor, dass die Flansche im Bereich der Finger innerhalb einer die Flansche miteinander verbindenden Buchse angeordnet sind. Dies hat sich ebenfalls als günstig erwiesen, um eine ungewollte Ablenkung der durch die Ventilöffnung und die Durchführöffnung der Flansche hindurchgeführten elektrischen geladenen Teilchen bzw. Strahlen von elektrisch geladenen Teilchen noch besser zu unterbinden. Die Buchse ist günstigerweise auf zumindest einem der Flansche verschiebbar gelagert.

Die Flansche sind bevorzugt elektrisch leitend miteinander verbunden. Die gilt besonders bevorzugt für alle Stellungen der Flansche relativ zueinander, aber insbesondere dann, wenn die Flansche in der maximalen Freigabestellung des Verschlussorgans an die einander gegenüberliegenden Wandbereiche des Ventilgehäuses angedrückt sind und dabei die Durchführöffnungen der Flansche die Ventilöffnungen miteinander verbinden. Besonders bevorzugt sind Ausgestaltungsformen der Erfindung, bei denen die Flansche mittels eines Kontaktblechs elektrisch leitend miteinander verbunden sind, wobei die Finger der Flansche in einem vom Kontaktblech umgebenen Innenraum angeordnet sind. Das Kontaktblech ist günstigerweise umfangsgeschlossen und/oder rohrförmig ausgeführt. Zur Sicherstellung eines besonders guten elektrisch leitfähigen Kontaktes zwischen den beiden Flanschen und dem Kontaktblech sehen bevorzugte Varianten vor, dass jeder Flansch auf einer der Durchführöffnungen gegenüberliegenden Außenseite des jeweiligen Flansches eine umlaufende und nach außen abstehende Wulst aufweist. Bevorzugt ist dann vorgesehen, dass das Kontaktblech jeweils auf dem Wulst des jeweiligen Flansches aufliegt. Hierdurch kann eine dauerhafte und sichere elektrische Kontaktierung zwischen den Wülsten über das Kontaktblech sichergestellt werden.

Bevorzugte Ausgestaltungsformen der Erfindung sehen vor, dass auf einer bzw. der, der Durchführöffnung gegenüberliegenden Außenseite des jeweiligen Flansches jeweils ein Abnehmerstutzen angeordnet ist, wobei das Kontaktblech jeweils zwischen dem jeweiligen Abnehmerstutzen und dem jeweiligen Flansch hindurchgeführt ist. Die Abnehmerstutzen sind günstigerweise zumindest bereichsweise als Rohrstutzen ausgebildet. Bevorzugt ist dabei vorgesehen, dass jeder Abnehmerstutzen eine umlaufende und nach innen abstehende Wulst aufweist, mit der der jeweilige Abnehmerstutzen gegen das Kontaktblech drückt. Das Kontaktblech ist also günstigerweise einerseits zwischen den Wulsten der Flansche und andererseits zwischen den Wulsten der Abnehmerstutzen eingeklemmt. Im Sinne einer sicheren elektrischen Kontaktierung handelt es sich günstigerweise um ein elastisch deformierbares bzw. federndes Kontaktblech. Die Wulste der Abnehmerstutzen drücken dabei günstigerweise in einen Bereich auf das Kontakblech, welcher zwischen den Wulsten der Flansche liegt.

Weitere Merkmale und Einzelheiten bevorzugter Ausgestaltungsformen der Erfindung werden exemplarisch in der nachfolgenden Figurenbeschreibung erläutert. Es zeigen:
- Fig. 1: ein erfindungsgemäßes Ventil in einer perspektivischen Darstellung von außen;
- Fig. 2: das Ventil aus Fig. 1 ohne Ventilgehäuse;
- Fig. 3: einen Längsschnitt durch das Ventil aus Fig. 1, bei dem sich das Verschlussorgan in der Schließstellung befindet;
- Fig. 4: einen Längsschnitt durch das erfindungsgemäße Ventil aus Fig. 1, bei dem sich das Verschlussorgan in der maximalen Freigabestellung befindet;
- Fig. 5: die Flansche, das Kontaktblech und die Abnehmerstutzen dieses Ausführungsbeispiels gemäß der Fig. 1 und 4 in einer Explosionsdarstellung und
- Fig. 6: den Bereich A aus Fig. 4 vergrößert.

Bei erfindungsgemäßen Ventilen 1 handelt es sich, wie auch in dem hier gezeigten Ausführungsbeispiel bevorzugt um sogenannte Vakuumventile. Vakuumventile kommen in der Regel dann zum Einsatz, wenn in einer speziellen Atmosphäre und/oder in einem speziellen Druckniveau gearbeitet werden soll. Von Ventilen spricht man insbesondere dann, wenn mit Druckdifferenzen kleiner oder gleich 0,001 mbar (Millibar) bzw. 0,1 Pascal gearbeitet wird. Man kann von Vakuumventilen aber auch bereits dann sprechen, wenn sie für Druckdifferenzen unter Normaldruck also unter 1 bar ausgelegt sind.

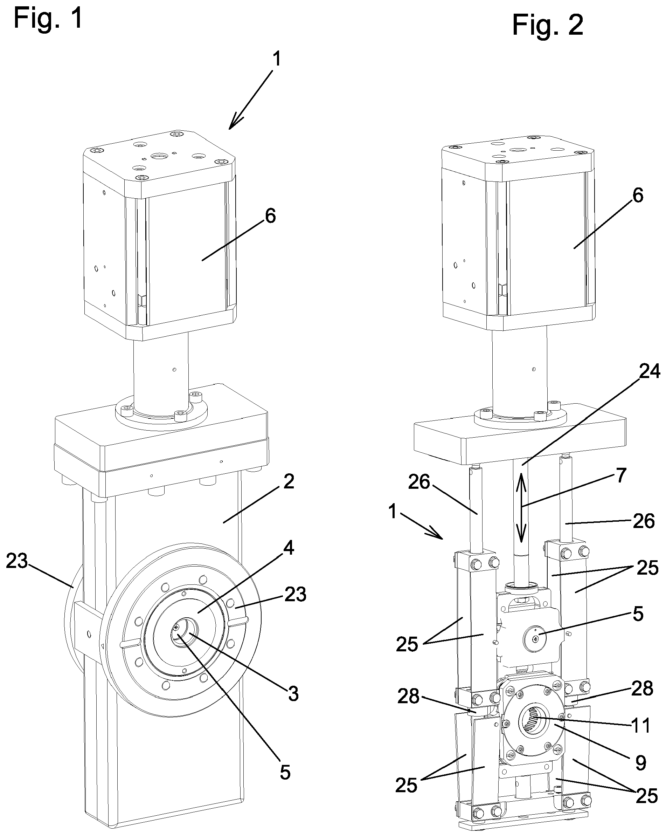

Fig. 1 zeigt nun eine erfindungsgemäße Ausführungsvariante eines Ventils 1, welches als Vakuumventil ausgeführt ist, mit einem Ventilgehäuse 2 und Ventilöffnungen 3, welche in einander gegenüberliegenden Wandbereichen 4 des Ventilgehäuses 2 angeordnet sind. Im gezeigten wie auch in anderen Ausführungsbeispielen können die Wandbereiche 4, welche die Ventilöffnungen 3 umgeben, als Gehäuseflansche 23 ausgebildet sein, womit das Ventil 1 an entsprechenden Rohrleitungen und/oder Kammeraußenwänden von Prozesskammern befestigt werden kann. Dies ist an sich bekannt und muss nicht weiter erläutert werden. Das Verschlussorgan 5 des erfindungsgemäßen Ventils 1 verschließt in einer Schließstellung zumindest eine der Ventilöffnungen 3, so wie dies in Fig. 1 auch zu sehen ist.

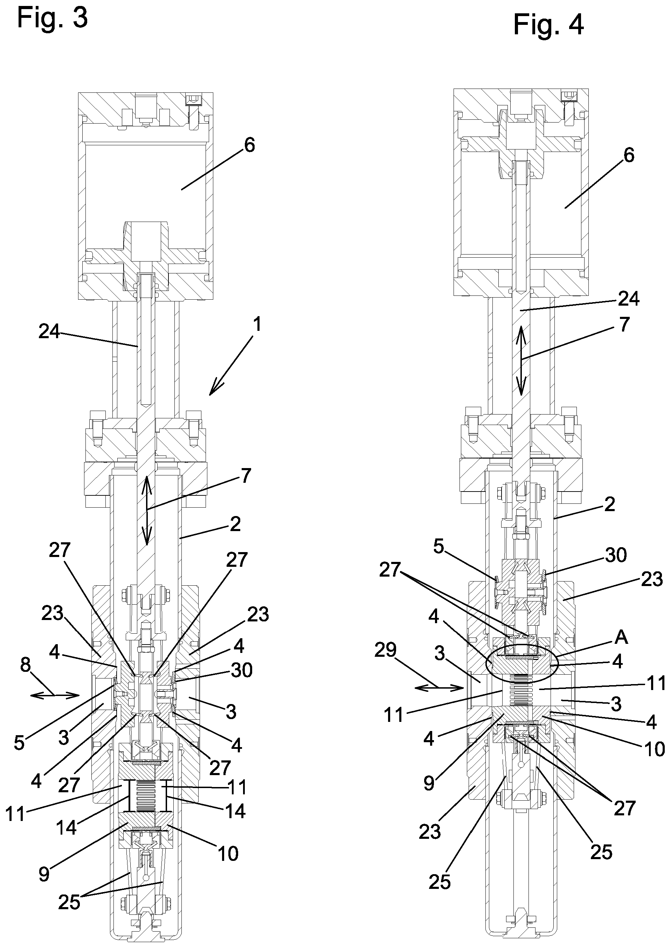

In Fig. 2 ist das Ventilgehäuse 2 nicht dargestellt. Man sieht dadurch unter anderem die vom Ventilantrieb 6 in den einander entgegengesetzten ersten Bewegungsrichtungen 7 angetriebene Ventilstange 24. Im gezeigten Ausführungsbeispiel handelt es sich bei dem Ventilantrieb 6 um einen reinen Linearantrieb, welcher, wie in den Schnittdarstellungen gemäß Fig. 3 und 4 dargestellt, in an sich bekannter Weise z.B. als hydraulisch oder pneumatisch angetriebene Kolben-Zylinderanordnungen, aber auch als elektrischer Linearantrieb und dergleichen ausgestaltet sein kann. In Fig. 2 ist auch gut zu sehen, wie die Ventilstange 24 das Verschlussorgan 5 mit dem Ventilantrieb 6 verbindet. Unterhalb des Verschlussorgans 5 sieht man einen der beiden Flansche 9 mit seiner Durchführöffnung 11. Der zweite Flansch 10 befindet sich auf der Rückseite hierzu, welcher in Fig. 2 nicht zu sehen ist. Die Flansche 9 und 10 sind von dem zumindest einen Ventilantrieb 6 aufeinander zu und voneinander weg bewegbar und bezüglich der Bewegung des Verschlussorgans entlang der ersten einander entgegengesetzten Bewegungsrichtungen 7 mit dem Verschlussorgan 5 zwangsgekoppelt. Dies bedeutet, dass die Flansche 9, 10 in den ersten Bewegungsrichtungen 7 immer dann mitbewegt werden, wenn das Verschlussorgan 5 in den einander entgegengesetzten ersten Bewegungsrichtungen 7 vom Ventilantrieb 6 bewegt wird.

Sowohl die Flansche 9 und 10 als auch das Verschlussorgan 5 sind über die Federelemente 25 auf Führungsstangen 26 geführt. Auf den Führungsstangen 26 befinden sich auch Anschläge 28, deren Funktion weiter unten noch näher erläutert wird.

Fig. 3 zeigt nun in einem Längsschnitt durch das Ventil 1 die Stellung, bei der das Verschlussorgan 5 sich in der Schließstellung befindet und somit eine der Ventilöffnungen 3 verschließt. Beim Vergleich von Fig. 3 und Fig. 4 sieht man, dass das Verschlussorgan 5 von dem als Linearantrieb ausgeführten Ventilantrieb 6 in den einander entgegengesetzten ersten Bewegungsrichtungen 7 zwischen der maximalen Freigabestellung gemäß Fig. 4 und einer Zwischenstellung hin und her bewegt wird. So etwas ist an sich bekannt. In der Zwischenstellung ist das Verschlussorgan 5 von beiden Ventilöffnungen 3 abgehoben, aber zwischen den Ventilöffnungen 3 angeordnet. Aus dieser Zwischenstellung heraus wird das Verschlussorgan 5 in einer der zweiten Bewegungsrichtungen 8 in Richtung hin zu dem, die entsprechende Ventilöffnung 3 umgebenden Wandbereich 4 oder in anderen Worten zum Ventilsitz hin bewegt, indem der Ventilantrieb 6 gegen die Anschläge 28 fährt und die Kippplättchen 27 zu einem entsprechenden Aufspreizen und damit für ein Andrücken des Verschlussorgans 5 an den Ventilsitz bzw. dem die Ventilöffnung 3 umgebenden Wandbereich 4 des Ventilgehäuses 2 sorgen. Hierdurch wird das Verschlussorgan 5 in seine Schließstellung gebracht, in der es eine der Ventilöffnungen 3 verschließt, so wie dies in Fig. 3 dargestellt ist.

Um das Verschlussorgan 5 aus dieser Schließstellung wieder in die Zwischenstellung zu bringen, wird vom Ventilantrieb 6 die Ventilstange 24 in einer der ersten Bewegungsrichtungen 7 ein Stück weit nach oben gezogen, wodurch die Kippplättchen 27 entsprechend wieder die in Fig. 4 dargestellte Stellung zurückgekippt werden. Durch weiteres Ziehen an der Ventilstange 24 in einer der ersten Bewegungsrichtungen 7 nach oben, wird dann das Verschlussorgan 5 mitsamt den Flanschen 9, 10 in die maximale Freigabestellung gemäß Fig. 4 gezogen. Die Flansche 9, 10 werden dabei aufgrund ihrer Zwangskopplung bezüglich der ersten Bewegungsrichtung 7 mit dem Verschlussorgan 5 mitbewegt. Durch ein entsprechendes Anschlagen an den Anschlägen 28 werden dabei die Flansche 9 und 10 mittels der dort angeordneten Kippplättchen 27 in einer der Spreizrichtungen 29 auseinander gespreizt, sodass die Flansche 9 und 10 in der maximalen Freigabestellung des Verschlussorgans 5 an die einander gegenüberliegenden Wandbereiche 4 des Ventilgehäuses 2 angedrückt sind und dabei die Durchführöffnung 11 der Flansche 9 und 10 die Ventilöffnungen 3 miteinander verbinden, so wie dies in Fig. 4 dargestellt ist. All dies wird in diesem Ausführungsbeispiel von einem einzigen Ventilantrieb 6, welcher als Linearantrieb ausgestaltet ist, bewerkstelligt. Das Spreizen mittels der Anschläge 28 und der Kippplättchen 27 und auch die Rückstellung mittels der Federelemente 25 sowohl des Verschlussorgans 5 in den einander entgegengesetzten zweiten Bewegungsrichtungen 8 als auch der Flansche 9 und 10 in den einander entgegengesetzten Spreizrichtungen 29 ist an sich bekannt und Stand der Technik, sodass es nicht weiter erläutert werden muss. Es sei lediglich darauf hingewiesen, dass abweichend vom hier gezeigten Ausführungsbeispiel erfindungsgemäße Ventile 1 natürlich auch zwei Verschlussorgane aufweisen können, die auf einander entgegengesetzten Seiten in der Schließstellung jeweils eine der Ventilöffnungen 3 verschließen. Dies kann in einfacher Art und Weise erreicht werden, indem man die hier realisierte Abstützplatte 30 durch ein zweites Verschlussorgan 5 ersetzt. Das oder die Verschlussorgane 5 sind jedenfalls günstigerweise in bevorzugten Ausgestaltungsformen als Ventilplatten ausgeführt.

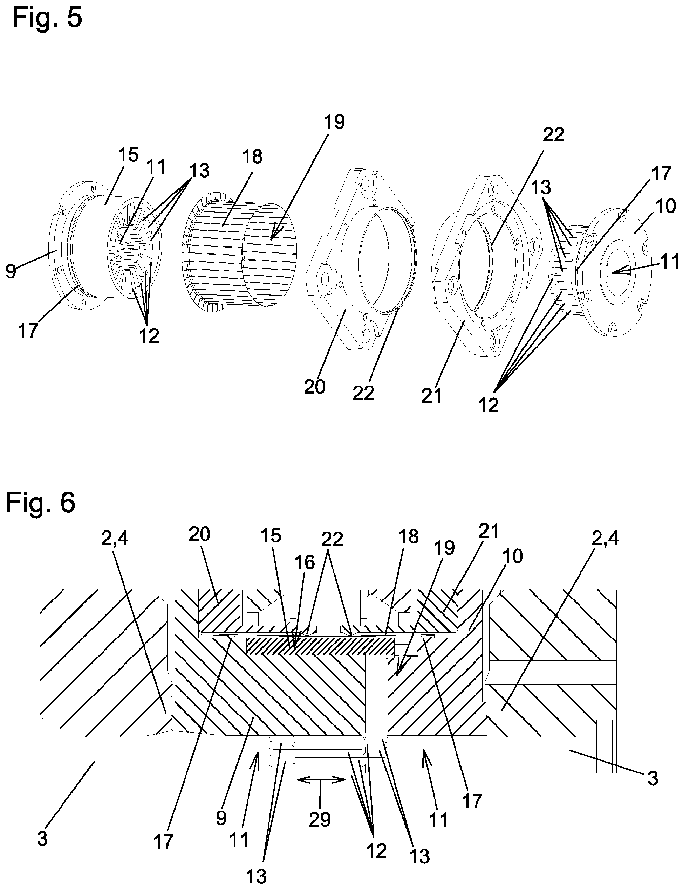

In der Explosionsdarstellung gemäß Fig. 5 ist nun gut zu sehen, dass auch in diesem Ausführungsbeispiel erfindungsgemäß die beiden Flansche 9 und 10 jeweils eine Abfolge von Fingern 12 und jeweils zwischen zwei benachbarten Fingern 12 angeordneten Ausnehmungen 13 aufweisen. In Fig. 6 aber auch in den Fig. 3 und 4 ist dann wiederum zu sehen, dass die Finger 12 des jeweiligen Flansches 9 bzw. 10 die Durchführöffnungen 11 des jeweiligen Flansches 9 und 10 umgeben und die Finger 12 des einen Flansches 9 jeweils in eine der Ausnehmungen 13 des anderen Flansches 10 eingreifen.

Günstigerweise ist dies, wie hier auch realisiert, in allen Stellungen der Flansche 9 und 10 relativ zueinander der Fall. Weiters ist es auch günstig, dass sich die Finger 12 des einen Flansches 9 dabei nicht mit den Fingern 12 des anderen Flansches 10 berühren. In Fig. 5 ist gut zu sehen, dass die Finger 12 der beiden hier realisierten Flansche 9 und 10 plattenförmig, genauer gesagt in Form von Keilplatten ausgebildet sind. Sie sind bevorzugt gerade und längserstreckt ausgebildet und weisen mit ihren frei auskragenden Enden jeweils in Richtung hin zum anderen Flansch 9 bzw. 10. Weiters ist in Fig. 5 gut zu erkennen, dass hier die Finger 12 des jeweiligen Flansches 9 und 10 die Durchführöffnung 11 des jeweiligen Flansches 9 und 10 ringförmig umgeben.

Wie eingangs bereits erläutert, können erfindungsgemäße Ausführungsbeispiele aber auch Finger 12 vorsehen, welche weniger platten- sondern mehr stiftförmig ausgebildet sind. Wie in den Fig. 3 und 4 zu sehen, ist günstigerweise jeweils vorgesehen, dass die Öffnungsquerschnitte 14 der Durchführöffnungen 11 der Flansche 9 und 10 zumindest im Bereich der Finger 12 überall gleich groß sind.

In Fig. 5 sieht man auch die Buchse 15 und die jeweils an den Flanschen 9 und 10 ausgebildeten, umlaufenden und nach außen abstehenden Wülste 17. Dargestellt sind in Fig. 5 auch die Abnehmerstutzen 20 und 21 mit ihren jeweils nach innen weisenden, umlaufenden Wülsten 22.

Der zusammengebaute Betriebszustand wird nun anhand von Fig. 6 erläutert, welche den Ausschnitt A aus Fig. 4 vergrößert zeigt. Aus der Zusammenschau der Fig. 5 und 6 geht gut hervor, dass die Flansche 9 und 10 im Bereich der Finger 12 innerhalb der die Flansche 9 und 10 miteinander verbindenden Buchse 15 angeordnet sind. Die Buchse 15 ist dabei zumindest auf einem der Flansche 9 bzw. 10 verschiebbar gelagert, um eine entsprechende Relativbewegung der Flansche 9 und 10 aufeinander zu und voneinander weg nicht zu stören. Die Flansche 9 und 10 sind aber in diesem Ausführungsbeispiel mittels des hier umfangsgeschlossenen, rohrförmig ausgeführten Kontaktblechs 18 elektrisch leitend miteinander verbunden. Die Finger 12 der Flansche 9 und 10 sind in dem, vom Kontaktblech 18 umgebenen Innenraum 19 angeordnet. In Fig. 6 ist auch gut zu sehen, dass das Kontaktblech 18 im Sinne einer optimalen elektrischen Kontaktierung der Flansche 9 und 10 miteinander jeweils auf den Wülsten 17 der Flansche 9 und 10 aufliegt. Dies gilt bevorzugt in allen Stellungen der beiden Flansche 9 und 10 relativ zueinander. In Fig. 6 sieht man auch, wie die Abnehmerstutzen 20 und 21 auf der der Durchführöffnung 11 jeweils gegenüberliegenden Außenseite des jeweiligen Flansches 9 und 10 angeordnet sind. Das Kontaktblech 18 ist, wie in Fig. 6 dargestellt, in diesem Ausführungsbeispiel auch jeweils zwischen dem jeweiligen Abnehmerstutzen 20 und 21 und dem jeweiligen Flansch 9 und 10 hindurchgeführt.

Die nach innen abstehenden Wülste 22 der Abnehmerstutzen 20 und 21 drücken von außen jeweils gegen das Kontaktblech 18. Über das Kontakblech 18 sind die beiden Flansche 9 und 10 somit permanent elektrisch leitend verbunden. Eine gewisse Elastizität des Kontaktblechs 18 und die Anordnung zwischen den Wülsten 17 der Flansche 9 und 10 und den Wülsten 22 der Abnehmerstutzen 20 und 21 sorgt besonders gut für eine sichere Kontaktierung in allen Stellungen der Flansche 9 und 10 relativ zueinander. Hierbei ist es günstig, wenn, wie in Fig. 6 auch dargestellt, die Wülste 22 der Abnehmerstutzen 20 und 21 in einem Bereich zwischen den Wülsten 17 der Flansche 9 und 10 angeordnet sind. Insgesamt wird auch bei diesem erfindungsgemäßen Ausführungsbeispiel ein Ventil 1 geschaffen, bei dem durch die Ventilöffnung 3 und die Durchführöffnungen 11 hindurchgeführte elektrisch geladene Teilchen bzw. Strahlen möglichst wenig abgelenkt bzw. gestört werden.

**Legende zu den Hinweisziffern:**

| | | | |
|---|---|---|---|
| 1 | Ventil | 29 | Spreizrichtungen |
| 2 | Ventilgehäuse | 30 | Abstützplatte |
| 3 | Ventilöffnung | | |
| 4 | Wandbereich | | |
| 5 | Verschlussorgan | | |
| 6 | Ventilantrieb | | |
| 7 | erste Bewegungsrichtung | | |
| 8 | zweite Bewegungsrichtung | | |
| 9 | Flansch | | |
| 10 | Flansch | | |
| 11 | Durchführöffnung | | |
| 12 | Finger | | |
| 13 | Ausnehmung | | |
| 14 | Öffnungsquerschnitt | | |
| 15 | Buchse | | |
| 16 | Außenseite | | |
| 17 | Wulst | | |
| 18 | Kontaktblech | | |
| 19 | Innenraum | | |
| 20 | Abnehmerstutzen | | |
| 21 | Abnehmerstutzen | | |
| 22 | Wulst | | |
| 23 | Gehäuseflansch | | |
| 24 | Ventilstange | | |
| 25 | Federelement | | |
| 26 | Führungsstange | | |
| 27 | Kippplättchen | | |
| 28 | Anschlag | | |

## Patentansprüche

1. Ventil (1), insbesondere Vakuumventil, mit einem Ventilgehäuse (2) und Ventilöffnungen (3) in einander gegenüberliegenden Wandbereichen (4) des Ventilgehäuses (2) und mit einem Verschlussorgan (5) sowie zumindest einem Ventilantrieb (6), wobei das Verschlussorgan (5) in einer Schließstellung zumindest eine der Ventilöffnungen (3) verschließt und in einer Zwischenstellung von beiden Ventilöffnungen (3) abgehoben zwischen den Ventilöffnungen (3) angeordnet ist und in einer maximalen Freigabestellung die Ventilöffnungen (3) vollständig freigibt, wobei das Verschlussorgan (5) von dem zumindest einen Ventilantrieb (6) in einander entgegengesetzten ersten Bewegungsrichtungen (7) zwischen der maximalen Freigabestellung und der Zwischenstellung hin und her bewegbar ist und in einander entgegengesetzten zweiten Bewegungsrichtungen (8) zwischen der Zwischenstellung und der Schließstellung hin und her bewegbar ist, wobei das Ventil (1) zusätzlich zwei einander gegenüberliegend angeordnete Flansche (9, 10) mit jeweils einer Durchführöffnung (11) aufweist, wobei die Flansche (9, 10) von dem zumindest einen Ventilantrieb (6) aufeinander zu und voneinander weg bewegbar sind und bezüglich der Bewegungen des Verschlussorgans (5) entlang der ersten Bewegungsrichtungen (7) mit dem Verschlussorgan (5) zwangsgekoppelt mitbewegbar verbunden sind, wobei die Flansche (9, 10) in der maximalen Freigabestellung des Verschlussorgans (5) an die einander gegenüberliegenden Wandbereiche (4) des Ventilgehäuses (2) angedrückt sind und dabei die Durchführöffnungen (11) der Flansche (9, 10) die Ventilöffnungen (3) miteinander verbinden, **dadurch gekennzeichnet, dass** die beiden Flansche (9, 10) jeweils eine Abfolge von Fingern (12) und jeweils zwischen zwei benachbarten Fingern (12) angeordneten Ausnehmungen (13) aufweisen, wobei die Finger (12) des jeweiligen Flansches (9, 10) die Durchführöffnung (11) des jeweiligen Flansches (9, 10) umgeben und die Finger (12) des einen Flansches (9) jeweils in die Ausnehmungen (13) des anderen Flansches (10) eingreifen.

2. Ventil (1) nach Anspruch 1, **dadurch gekennzeichnet, dass** die Finger (12) des einen Flansches (9) in allen Stellungen der Flansche (9, 10) relativ zueinander jeweils in die Ausnehmungen (13) des jeweils anderen Flansches (10) eingreifen und/oder dass die Finger (12) des einen Flansches (9), vorzugsweise in allen Stellungen der Flansche (9, 10) relativ zueinander, die Finger (12) des anderen Flansches (10) nicht berühren.

3. Ventil (1) nach Anspruch 1 oder 2, **dadurch gekennzeichnet, dass** die Finger (12) des jeweiligen Flansches (9, 10) die Durchführöffnung (11) des jeweiligen Flansches (9, 10) ringförmig umgeben und/oder dass die Finger (12) des jeweiligen Flansches (9, 10) in Richtung hin zum anderen Flansch (9, 10) gerade und/oder längserstreckt ausgebildet sind.

4. Ventil (1) nach einem der Ansprüche 1 bis 3, **dadurch gekennzeichnet, dass** die Öffnungsquerschnitte (14) der Durchführöffnungen (11) der Flansche (9, 10) zumindest im Bereich der Finger (12) überall gleich groß sind.

5. Ventil (1) nach einem der Ansprüche 1 bis 4, **dadurch gekennzeichnet, dass** die Flansche (9, 10) im Bereich der Finger (12) innerhalb einer, die Flansche (9, 10) miteinander verbindenden Buchse (15) angeordnet sind.

6. Ventil (1) nach einem der Ansprüche 1 bis 5, **dadurch gekennzeichnet, dass** jeder Flansch (9, 10) auf einer, der Durchführöffnung (11) gegenüberliegenden Außenseite (16) des jeweiligen Flansches (9, 10) eine umlaufende und nach außen abstehende Wulst (17) aufweist.

7. Ventil (1) nach einem der Ansprüche 1 bis 6, **dadurch gekennzeichnet, dass** die Flansche (9, 10) mittels eines, vorzugsweise umfangsgeschlossenen und/oder rohrförmigen Kontaktblechs (18) elektrisch leitend miteinander verbunden sind, wobei die Finger (12) der Flansche (9, 10) in einem, vom Kontaktblech (18) umgebenen Innenraum (19) angeordnet sind.

8. Ventil (1) nach Anspruch 6 und 7, **dadurch gekennzeichnet, dass** das Kontaktblech (18) jeweils auf dem Wulst (17) des jeweiligen Flansches (9, 10) aufliegt.

9. Ventil (1) nach Anspruch 7 oder 8, **dadurch gekennzeichnet, dass** auf einer bzw. der, der Durchführöffnung (11) gegenüberliegenden Außenseite (16) des jeweiligen Flansches (9, 10) jeweils ein Abnehmerstutzen (20, 21) angeordnet ist, wobei das Kontaktblech (18) jeweils zwischen dem jeweiligen Abnehmerstutzen (20, 21) und dem jeweiligen Flansch (9, 10) hindurchgeführt ist.

10. Ventil (1) nach Anspruch 9, **dadurch gekennzeichnet, dass** jeder Abnehmerstutzen (20, 21) eine umlaufende und nach innen abstehende Wulst (22) aufweist, mit der der jeweilige Abnehmerstutzen (20, 21) gegen das Kontaktblech (18) drückt.

## Claims

1. A valve (1), in particular vacuum valve, with a valve housing (2) and valve openings (3) in opposing wall regions (4) of the valve housing (2), and with a closure element (5) and also at least one valve drive (6), wherein the closure element (5) in a closed position closes at least one of the valve openings (3) and in an intermediate position is arranged between the valve openings (3), lifted off from both valve openings (3), and in a maximum release position completely releases the valve openings (3), wherein the closure element (5), by the at least one valve drive (6), is movable back and forth between the maximum release position and the intermediate position in opposed first directions of movement (7), and is movable back and forth between the intermediate position and the closed position in opposed second directions of movement (8), wherein the valve (1) additionally has two flanges (9, 10) arranged opposing each other with one passage opening (11) in each case, wherein the flanges (9, 10) are movable towards each other and away from each other by the at least one valve drive (6), and with respect to the movements of the closure element (5) along the first directions of movement (7) are connected to the closure element (5) so as to be jointly movable by constrained coupling, wherein the flanges (9, 10) in the maximum release position of the closure element (5) are pressed against the opposing wall regions (4) of the valve housing (2) and in so doing the passage openings (11) of the flanges (9, 10) connect the valve openings (3) together, **characterised in that** the two flanges (9, 10) have in each case a sequence of fingers (12) and cutouts (13) arranged in each case between two adjacent fingers (12), with the fingers (12) of the respective flange (9, 10) surrounding the passage opening (11) of the respective flange (9, 10) and the fingers (12) of the one flange (9) engaging in each case in the cutouts (13) in the other flange (10).

2. A valve (1) according to claim 1, **characterised in that** the fingers (12) of the one flange (9) in all positions of the flanges (9, 10) relative to each other engage in each case in the cutouts (13) in the respective other flange (10), and/or **in that** the fingers (12) of the one flange (9), preferably in all positions of the flanges (9, 10) relative to each other, do not touch the fingers (12) of the other flange (10).

3. A valve (1) according to claim 1 or 2, **characterised in that** the fingers (12) of the respective flange (9, 10) surround the passage opening (11) of the respective flange (9, 10) in a ring shape, and/or **in that** the fingers (12) of the respective flange (9, 10) are formed as straight and/or extended lengthwise in the direction towards the other flange (9, 10).

4. A valve (1) according to one of claims 1 to 3, **characterised in that** the opening cross-sections (14) of the passage openings (11) of the flanges (9, 10) are of the same size throughout at least in the region of the fingers (12).

5. A valve (1) according to one of claims 1 to 4, **characterised in that** the flanges (9, 10) in the region of the fingers (12) are arranged within a bush (15) which connects the flanges (9, 10) together.

6. A valve (1) according to one of claims 1 to 5, **characterised in that** each flange (9, 10) has on an outer side (16) of the respective flange (9, 10) which is located opposite the passage opening (11) an encircling bead (17) which protrudes outwards.

7. A valve (1) according to one of claims 1 to 6, **characterised in that** the flanges (9, 10) are connected together in an electrically conductive manner by means of a contact plate (18) which is preferably peripherally closed and/or tubular, with the fingers (12) of the flanges (9, 10) being arranged in an interior (19) surrounded by the contact plate (18).

8. A valve (1) according to claims 6 and 7, **characterised in that** the contact plate (18) lies in each case on the bead (17) of the respective flange (9, 10).

9. A valve (1) according to claim 7 or 8, **characterised in that** a take-off port (20, 21) is arranged in each case on a or the outer side (16) of the respective flange (9, 10) which is located opposite the passage opening (11), with the contact plate (18) being guided through in each case between the respective take-off port (20, 21) and the respective flange (9, 10).

10. A valve (1) according to claim 9, **characterised in that** each take-off port (20, 21) has an encircling and inwards-protruding bead (22) with which the respective take-off port (20, 21) presses against the contact plate (18).

## Revendications

1. Soupape (1), en particulier soupape à vide, comportant un boîtier de soupape (2) et des ouvertures de soupape (3) dans des zones de paroi (4) du boîtier de soupape (2) se faisant face, et comportant un organe de fermeture (5) ainsi qu'au moins un actionneur de soupape (6), l'organe de fermeture (5) fermant, dans une position de fermeture, au moins l'une des ouvertures de soupape (3), et étant, dans une position intermédiaire, dégagé des deux ouvertures de soupape (3) et disposé entre les ouvertures de soupape (3), et libérant complètement les ouvertures de soupape (3) dans une position maximale de libération, l'organe de fermeture (5) étant mobile entre la position maximale de libération et la position intermédiaire par l'intermédiaire dudit au moins un actionneur de soupape (6) selon un mouvement de va-et-vient dans des premières directions de mouvement (7) opposées l'une à l'autre, et mobile entre la position intermédiaire et la position de fermeture selon un mouvement de va-et-vient dans des deuxièmes directions de mouvement (8) opposées l'une à l'autre, la soupape (1) comportant en outre deux brides (9, 10) disposées l'une en face de l'autre et munies chacune d'une ouverture de passage (11), les brides (9, 10) pouvant être déplacées de manière à être rapprochées ou éloignées l'une de l'autre à l'aide dudit au moins un actionneur de soupape (6) et étant reliées à l'organe de fermeture (5) de manière à pouvoir être déplacées de manière solidaire avec celui-ci par couplage forcé en fonction des mouvements de l'organe de fermeture (5) le long des premières directions de déplacement (7), les brides (9, 10) étant, dans la position maximale de libération de l'organe de fermeture (5), pressées contre les zones de paroi (4) du boîtier de soupape (2) se faisant face, les ouvertures de passage (11) des brides (9, 10) reliant alors les ouvertures de soupape (3) entre elles, **caractérisée en ce que** les deux brides (9, 10) comportent chacune une succession de doigts (12) et, entre deux doigts adjacents (12), des évidements (13), les doigts (12) de chaque bride (9, 10) entourant l'ouverture de passage (11) de ladite bride (9, 10), et les doigts (12) de l'une des brides (9) s'engageant dans les évidements (13) de l'autre bride (10).

2. Soupape (1) selon la revendication 1, **caractérisée en ce que** les doigts (12) de l'une des brides (9) s'engagent, dans toutes les positions relatives des brides (9, 10) entre elles, dans les évidements (13) de l'autre bride (10), et/ou **en ce que** les doigts (12) de l'une des brides (9), de préférence dans toutes les positions relatives des brides (9, 10) entre elles, ne touchent pas les doigts (12) de l'autre bride (10).

3. Soupape (1) selon la revendication 1 ou 2, **caractérisée en ce que** les doigts (12) de chaque bride (9, 10) entourent en forme annulaire l'ouverture de passage (11) de ladite bride (9, 10), et/ou **en ce que** les doigts (12) de chaque bride (9, 10) sont réalisés de manière droite et/ou allongée en direction de l'autre bride (9, 10).

4. Soupape (1) selon l'une des revendications 1 à 3, **caractérisée en ce que** les sections transversales d'ouverture (14) des ouvertures de passage (11) des brides (9, 10) sont partout de même taille, au moins dans la zone des doigts (12).

5. Soupape (1) selon l'une des revendications 1 à 4, **caractérisée en ce que** les brides (9, 10), dans la zone des doigts (12), sont disposées à l'intérieur d'un manchon (15) reliant les brides (9, 10) entre elles.

6. Soupape (1) selon l'une des revendications 1 à 5, **caractérisée en ce que** chaque bride (9, 10) comporte, sur un côté extérieur (16) de ladite bride, opposé à l'ouverture de passage (11), une nervure (17) périphérique saillant vers l'extérieur.

7. Soupape (1) selon l'une des revendications 1 à 6, **caractérisée en ce que** les brides (9, 10) sont reliées entre elles de manière électriquement conductrice au moyen d'une tôle de contact (18), de préférence fermée sur son pourtour et/ou de forme tubulaire, les doigts (12) des brides (9, 10) étant disposés dans un espace intérieur (19) entouré par la tôle de contact (18).

8. Soupape (1) selon les revendications 6 et 7, **caractérisée en ce que** la tôle de contact (18) repose sur la nervure (17) de la bride (9, 10) correspondante.

9. Soupape (1) selon la revendication 7 ou 8, **caractérisée en ce qu'**une tubulure de sortie (20, 21) est disposée sur le côté extérieur (16) de chaque bride (9, 10) opposé à l'ouverture de passage (11), la tôle de contact (18) passant entre la tubulure de sortie (20, 21) et la bride (9, 10) correspondante.

10. Soupape (1) selon la revendication 9, **caractérisée en ce que** chaque tubulure de sortie (20, 21) comporte une nervure périphérique (22) orientée vers l'intérieur, par laquelle la tubulure de sortie (20, 21) appuie contre la tôle de contact (18).
